# EUROPEAN PATENT SPECIFICATION

(11) **EP 1 068 660 B1**
(45) Date of publication and mention of the grant of the patent: **23.07.2003**
(21) Application number: 99912944.8
(22) Date of filing: 30.03.1999
(51) Int. Cl.: H02J 7/00

(54) **PROCESS AND APPARATUS FOR MODULATING TERMINAL VOLTAGE OF BATTERY**
VERFAHREN UND EINRICHTUNG ZUM ANPASSEN DER BATTERIEKLEMMENSPANNUNG
PROCEDE ET APPAREIL PERMETTANT DE MODULER LA TENSION AUX BORNES D'UN ACCUMULATEUR

(30) Priority: 30.03.1998 US 50310
(43) Date of publication of application: 17.01.2001
(73) Proprietor: Eveready Battery Company, Inc., Westlake, Ohio 44145-0616 (US)
(72) Inventor: RAHMAN, Syed, M., Hillsboro, OR 97124 (US)
(74) Representative: Lord, Hilton David
(86) International application number: PCT/US99/06906
(87) International publication number: WO 99/050947

(56) References cited:
- EP-A- 0 644 642
- EP-A- 0 760 547
- US-A- 5 204 608
- US-A- 5 646 501
- PATENT ABSTRACTS OF JAPAN vol. 017, no. 646 (E-1467), 30 November 1993 (1993-11-30) & JP 05 207678 A (SANSHA ELECTRIC MFG CO LTD), 13 August 1993 (1993-08-13)

## Description

This invention relates to rechargeable batteries and, more specifically, to a method and apparatus for modulating the terminal voltage of a battery at certain points during discharge to account for different discharge profiles exhibited by batteries having different cell chemistries.

EP-A-0 760 547 discloses a lithium ion secondary battery pack having temperature sensing and output voltage boosting circuits, for boosting a depressed output voltage at sensed low temperatures to a voltage expected to appear at normal temperatures, in order to provide a constant output voltage under different ambient temperatures.

EP-A-0 644 642 discloses battery over temperature protection and voltage regulation circuits including a MOSFET switch, for interrupting charging of a secondary battery when the battery temperature exceeds a predetermined value, or for providing a constant output voltage in a disposable battery.

In the past, batteries (also known as "dumb" cells) provided an unpredictable source of power since, typically, a user of a device powered by a battery had no reliable advance warning that a battery was about to run out of operable capacity. Thus, there was no indication of how much use time remained so that a user could, for example, save the data currently being worked on or locate an alternative power source prior to complete discharge of the battery. As a result, a number of electronic products have been specifically designed with circuitry that attempts to evaluate the battery's state of charge, in order to determine when to begin back-up operations prior to the battery running out of capacity. This is done, for example, by measuring the terminal voltage of the battery, and upon reaching a certain lower voltage limit executing certain end-of-discharge operations, such as triggering any necessary alarms or executing save-to-disk operations. This lower voltage limit is generally referred to as the end-of-discharge voltage (EODV) and is typically a constant that is set according to the remaining capacity necessary for such end-of-discharge operations and the requirements for safe, efficient use of a cell.

However, the discharge profile of a battery varies according to its cell chemistry. Therefore, if a product's circuitry is designed to begin EODV save-to-disk operations at a set voltage for a certain type of battery, and a different battery having a different cell chemistry with a different discharge curve is utilised to power the product, the EODV save-to-disk operations may be executed too soon resulting in a waste of capacity or, worse yet, too late resulting in loss of data.

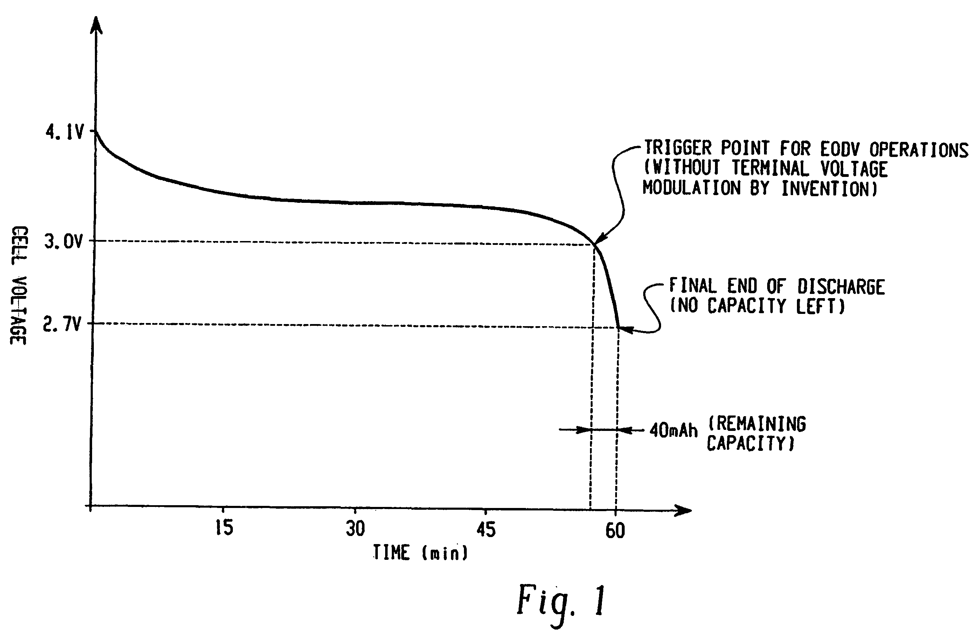

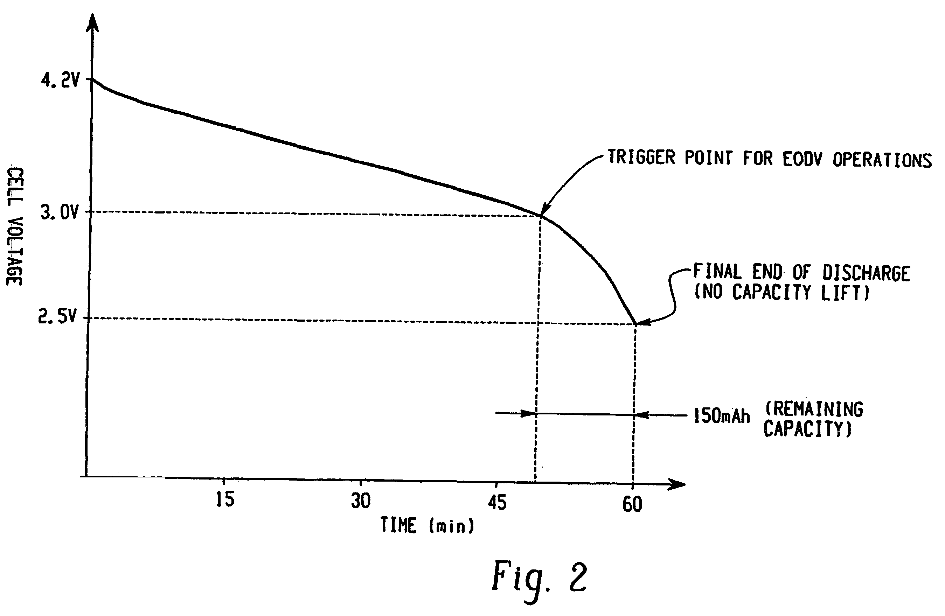

An example of two cell chemistries which have different discharge curves are graphite-based lithium-ion cells and coke-based lithium-ion cells. A typical graphite-based lithium-ion cell can have a discharge profile as shown in Figure 1, whereas a typical coke-based lithium-ion cell can have a discharge profile as shown in Figure 2. The discharge profile for coke-based lithium-ion cells drops gradually (Figure 2), while the discharge profile for graphite-based lithium-ion cells drops rapidly at the end of capacity (Figure 1). Accordingly, the voltage near the end of capacity in graphite-based lithium-ion cells is considerably higher than in the coke-based lithium-ion cells.

The various cell chemistries have certain lower limits to which they may safely be discharged without adversely affecting the battery performance. For example, on the one hand, graphite-based lithium-ion cells should not be discharged below 2.7V. Coke-based lithium-ion cells, on the other hand, may safely be discharged to 2.5V without adversely affecting performance. Therefore, if a product's circuitry is designed to begin EODV save-to-disk operations at a set voltage, *e.g.* 3.0V for a coke-based lithium-ion cell (which would leave approximately 150 mAh capacity), and a graphite-based lithium-ion cell is substituted therefor, when the terminal voltage reaches the present voltage of 3.0V, there is not enough capacity (*e.g.* only 40 mAh) remaining in the battery for such EODV save-to-disk operations and data may be lost. The same problems associated with the coke-based lithium-ion cells *versus* graphite-based lithium-ion cells may be recognised in other cells that have different cell chemistries, for example Li-polymer and NiMH cells.

Thus, it would be desirable to be able to provide a way to allow a product, which utilises terminal voltage measurements to trigger EODV or other operations, to begin such necessary operations at the appropriate point in the discharge curve regardless of-the true terminal voltage. We have now found, surprisingly, that this can be achieved by modulating the terminal voltage of a battery.

Accordingly, in a first aspect, the present invention provides a method for controlling the triggering of an operation in a device which utilises a battery terminal voltage measurement to trigger the operation at a predetermined threshold, comprising converting the terminal voltage to a predetermined value upon reaching a predetermined point to thereby trigger the operation or delay the triggering of the operation.

In a second aspect, the present invention provides an apparatus for controlling the triggering of an operation in a device which utilises a battery terminal voltage measurement to trigger the operation at a predetermined threshold, comprising means for converting the terminal voltage to a predetermined value upon reaching a predetermined point to thereby trigger the operation or delay the triggering of the operation.

In a third aspect, a battery is provided comprising circuitry for controlling the triggering of an operation in accordance with the present invention.

It will be appreciated that the device may be designed to trigger an operation at one given voltage threshold, or several operations each at a different voltage threshold along the battery discharge curve. Moreover, each voltage threshold may trigger more than one operation. Therefore, in another aspect, the present invention envisages converting the terminal voltage at more than one point along the true voltage discharge curve, so as to trigger more than one operation at the appropriate time.

Many products and electronic devices, such as portable computers, cellular phones, and the like, determine when to begin various operations based on the measured terminal voltage of a battery. Such devices were generally not designed to communicate with so-called "smart" batteries that provide necessary information to the device through bus communication. Therefore, in these devices, once the measured terminal voltage reaches a certain predetermined threshold value (such as 3.0V), operations such as save-to-disk operations begin to prevent loss of data. This predetermined threshold value is typically a constant value designed into the device itself. Often, the designers of the device base this value on the minimum capacity, for a certain cell chemistry, necessary to perform certain operations prior to shut down. The present invention provides a method and apparatus for converting the terminal voltage of a battery so that certain operations begin at the appropriate point on the discharge curve for various cell chemistries, even if the device's thresholds were programmed based on a single cell chemistry. The term "battery" as used herein represents any form of rechargeable cell which converts chemical energy into electric energy, including a single cell, a combination of cells connected in series or parallel, or a cell or cells assembled in a pack.

Thus, the present invention generally provides a method and apparatus for modulating the voltage of a battery at its terminals. The voltage at the terminals may be modulated to a higher or lower voltage than the true battery voltage, depending on the cell chemistry and the operating circumstances.

It will be appreciated that the triggering of an operation can be initiated or brought forward by modulating the battery terminal voltage to a value that is lower than the true battery voltage. By converting the terminal voltage to a value below the true battery voltage and the threshold voltage, the corresponding operation can be triggered substantially immediately. By converting the terminal voltage so as to depress it by a certain amount relative to the true battery voltage, the corresponding operation will be triggered when the continued discharge of the battery reduces the converted terminal voltage to the threshold voltage for triggering the operation.

It will further be appreciated that operation triggering can be delayed by modulating the battery terminal voltage to a value above the true battery voltage. By maintaining the terminal voltage at a value above the true battery voltage for a set period of time extending beyond the time when the true battery voltage reaches the threshold voltage, the operation triggering will be delayed. Alternatively, by boosting the terminal voltage by an amount relative to the true battery voltage, the terminal voltage will only reach the threshold voltage through continued discharge of the battery, when the true battery voltage has already dropped below the threshold voltage, thereby delaying triggering of the operation.

The present invention provides a method and apparatus for controlling the triggering of one or more operations in a device, such as a portable computer or cellular phone, which utilises a battery terminal voltage measurement for triggering the operations at a certain threshold(s), by converting the terminal voltage to a value(s) upon reaching a certain point(s). These points include, for example, points based on measurements such as battery voltage, cell voltage, remaining battery capacity, current, time, temperature, pressure, pH, and safety. The remaining capacity measurement is approximately a minimum value for remaining capacity required for completing end-of-discharge operations. The various operations include, for example, end-of-discharge operations, shut down operations, safety operations, save-to-disk operations, peripheral disabling operations, access disabling operations, sleep mode operations, low power mode operations, and alarm operations.

In a preferred embodiment, the terminal voltage is converted by discharge control circuitry within the circuitry of the battery. The discharge control circuitry activates voltage modulating circuitry to depress/lower, maintain or raise the terminal voltage. In a specific embodiment, the discharge control circuitry activates the voltage modulating circuitry to lower the terminal voltage to a predetermined value which substantially matches the predetermined threshold to trigger an operation. This voltage modulating circuitry may include for example a switch or a buck converter. In an alternative specific embodiment, the discharge control circuitry activates the voltage modulating circuitry to maintain the terminal voltage at a predetermined value above the predetermined threshold to delay triggering an operation. This alternative voltage modulating circuitry may include for example a boost converter/regulator or a dc-to-dc regulator.

In a further preferred embodiment, the present invention provides a control circuit for controlling the triggering of an operation in a device which utilises a battery terminal voltage measurement to trigger the operation at a predetermined threshold, comprising means for lowering the terminal voltage to a predetermined value which substantially matches the predetermined threshold to trigger the operation upon reaching a predetermined point, wherein the predetermined point is based on a measurement selected from battery voltage, cell voltage, remaining battery capacity, current, time, temperature, pressure, pH, and safety, and wherein the operation is selected from end-of-discharge operations, shut down operations, safety operations, save-to-disk operations, peripheral disabling operations, access disabling operations, sleep mode operations, low power mode operations, and alarm operations.

In an alternative further preferred embodiment, the present invention provides a control circuit for controlling the triggering of an operation in a device which utilises a battery terminal voltage measurement to trigger the operation at a predetermined threshold, comprising means for maintaining the terminal voltage at a predetermined value above the predetermined threshold for a predetermined period to delay triggering the operation upon reaching a predetermined point, wherein the predetermined point is based on a measurement selected from battery voltage, cell voltage, remaining battery capacity, current, time, temperature, pressure, pH, and safety, and wherein the operations is selected from end-of-discharge operations, shut down operations, safety operations, save-to-disk operations, peripheral disabling operations, access disabling operations, sleep mode operations, low power mode operations, and alarm operations.

The present invention will now be further illustrated by reference to the drawings, in which:
Figure 1 is a graph showing the discharge curve of a typical graphite-based lithium-ion cell having a cell capacity of 1350 mAh and a cell discharge rate of 1.35A;
Figure 2 is a graph showing the discharge curve of a typical coke-based lithium-ion cell having a cell capacity of 1300 mAh and a cell discharge rate of 1.3A;
Figure 3a is a circuit diagram of the discharge control circuitry which modulates the terminal voltage at a certain point(s) to a predetermined value(s); and
Figure 3b is a circuit diagram of the discharge control circuitry which modulates the terminal voltage at a certain point(s) to a predetermined value(s) and includes a boost regulator.

As can be seen from a comparison of Figures 1 and 2, the different cell chemistries for graphite-based and coke-based lithium-ion cells provide different discharge curves. Specifically, where a coke-based lithium-ion cell has approximately 150 mAh capacity remaining at a cell voltage of 3.0V (which is sufficient to complete end-of-discharge operations, such as operations save-to-disk operations), the graphite-based lithium-ion cell has approximately 40 mAh capacity remaining at a cell voltage of 3.0V (which is not sufficient to complete end-of-discharge operations, such as save-to-disk operations). However, if the end-of-discharge operations began at a cell voltage of for example 3.2V, there would be sufficient remaining capacity (approximately 150 mAh) to complete such operations. Unfortunately, devices which measure terminal voltage and begin certain operations at a predetermined threshold(s) are not designed to change this constant threshold(s) when battery chemistries are changed. The present invention solves this problem by modulating the terminal voltage to trigger the operations at the appropriate time irrespective of the cell chemistry of the battery. These operations begin early enough so that there is enough capacity remaining to complete the operations, or begin far enough down the discharge curve to avoid a waste of remaining capacity, depending on the cell chemistry and the operating conditions. Other cell chemistries, such as those of Li-polymer and NiMH cells, also have differing discharge curves, and the present invention is readily applicable in such other situations.

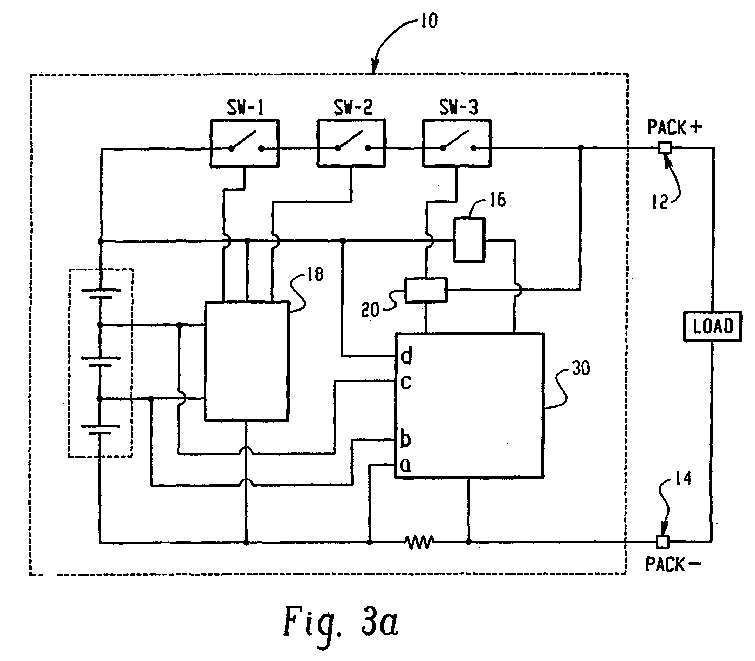

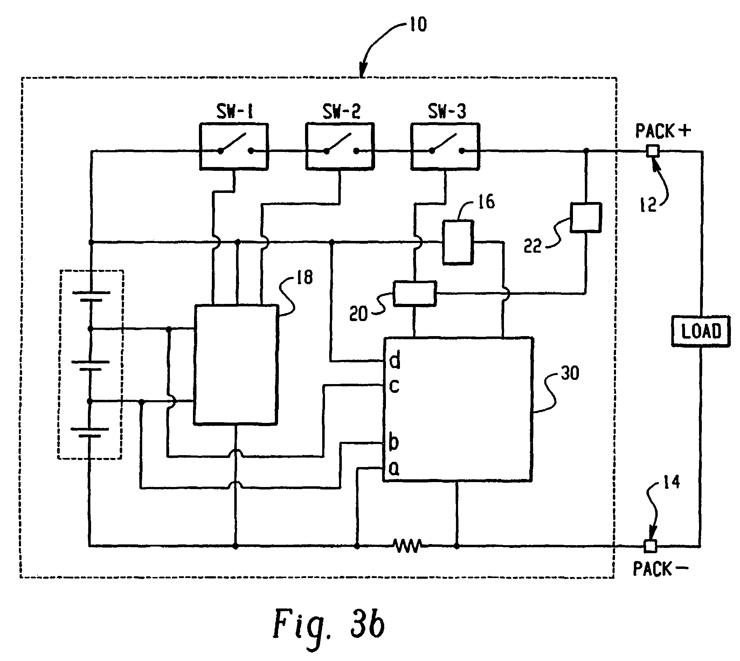

In Figures 3a and 3b, preferred circuitries for modulating the terminal voltage in a lithium-ion battery are illustrated. A typical battery 10 (three cells in series), having positive and negative terminals 12, 14 from which voltage may be measured by a device, is shown. The invention may be utilised with any cell or combination of cells and is not limited to that shown herein. Typically, the device (not shown) measures the terminal voltage at the battery terminals 12, 14 to determine if the terminal voltage has reached a predetermined value to begin operations, such as EODV save-to-disk operations. The circuitry allows the terminal voltage to be converted to a lower (Figure 3a) or higher (Figure 3b) value at an appropriate point so that the device which measures the terminal voltage is "deceived" into beginning operations, or delaying operations, at this "false" voltage shown on the terminals.

As shown in Figure 3a, attached to one of the terminals (*e.g.* positive terminal 12) is discharge control circuitry 20. The discharge control circuitry 20 is controlled by a microcontroller 30 or other suitable control logic. A voltage regulator 16 is attached to the microcontroller 30. The voltage regulator 16 powers the microcontroller and acts as a voltage reference for the discharge control circuitry 20. Other voltage reference devices may be utilised herein as known in the art. Protection circuits 18 and protection switches, SW-1 and SW-2 may also be included. The microcontroller has voltage sensing points a, b, c, d, as shown. The microcontroller 30 can measure the voltage at each cell to activate the control circuitry 20 if any of the cell voltages reach a control trigger capacity point. Alternatively, the microcontroller 30 can measure the voltage across the series of cells to determine when to activate the control circuitry 20. The microcontroller 30 can also utilise any other measurements, such as remaining battery capacity, current, time, temperature, pressure, pH, and safety to activate the control circuitry 20. For example, if a temperature sensor (or other safety monitor) determines at any time that an unsafe condition exists, the microcontroller 30 can activate the control circuitry 20 to lower the terminal voltage. The device reads this low terminal voltage and, believing the battery to be at its end of capacity, triggers a shut down of the device. In this manner, effectively, the present invention forces a shut down of the device for safety reasons, even if the device was never designed to have such safety shut down features.

In operation, the discharge control circuitry 20 in Figure 3a converts the terminal voltage by controlling a switch SW-3, such as a MOSFET. However, the present invention envisages any type of circuitry to accomplish the desired decrease in voltage at the terminals of the battery, such as regulators, including switch type, series type, shunt type, buck converters, and the like. When a device measures the terminal voltage after the discharge control circuitry 20 is activated, the voltage presented at the terminals is lower than the true voltage of the battery. In normal operation, the discharge control switch (SW-3) is ON. When discharging, if the microcontroller 30 determines that an operation needs to be triggered, such as when the capacity of the battery begins to reach the point where EODV operations should begin, the microcontroller 30 activates the discharge control circuitry 20 which activates the switch SW-3 to regulate the terminal voltage to a desired threshold voltage of, for example, 8V, even if the true battery voltage is above 8V.

In an alternative embodiment, if a device has more than one threshold voltage to trigger various operations, the circuitry 20 can convert the terminal voltage to each of those thresholds at the appropriate point in time/capacity.

A specific application of the embodiment represented in Figure 3a is when a graphite-based lithium-ion battery is used to emulate or mimic a coke-based lithium-ion battery so that the device begins its EODV operations with enough capacity remaining to perform such operations. The circuitry is preferably included in the battery's circuitry, *i.e.* within the battery pack, so that devices need not be modified in order to take advantage of the present invention. The devices can continue to utilise terminal voltage measurements to initiate operations, but the circuitry modifies the terminal voltage on the battery appropriately so that operations begin at the appropriate point on the discharge curve irrespective of battery chemistry.

Figure 3b represents the circuitry in an alternative embodiment of the present invention. This embodiment includes circuitry to increase or maintain the terminal voltage prior to reaching a predetermined threshold(s). This circuitry can be utilised in addition to or instead of that described in Figure 3a. Although the present invention envisages any type of circuitry to accomplish the desired increase or maintenance in voltage at the terminals of the battery, such as a boost regulator/converter, dc-to-dc converter, or switch capacitor, in the specific embodiment shown in Figure 3b, the discharge control circuitry 20 increases the terminal voltage by activating a boost converter/regulator 22. When a device measures the terminal voltage after the discharge control circuitry 20 is activated, the voltage presented at the terminals is higher than the true voltage of the battery. In this embodiment, when discharging, if the microcontroller 30 determines that an operation needs to be delayed, such as when there is still sufficient capacity remaining in the battery to continue regular operations, the microcontroller 30 activates the discharge control circuitry 20 which activates boost converter/regulator 22 to maintain the terminal voltage above the threshold voltage which would trigger EODV operations, until such operations need to be initiated.

In an alternative embodiment, if a device has more than one threshold voltage to trigger various operations, the circuitry 20 can maintain the terminal voltage above these thresholds until the appropriate point in time/capacity.

A specific application of the embodiment represented in Figure 3b is when a coke-based lithium-ion battery is used to emulate or mimic a graphite-based lithium-ion battery so that the initiation of the device's EODV operations is delayed to avoid wasting capacity. The circuitry is preferably included in the battery's circuitry, *i.e.* within the battery pack, so that devices need not be modified in order to take advantage of the present invention. The devices can continue to utilise terminal voltage measurements to initiate operations, but the circuitry increases the terminal voltage of the battery or maintains it above a specific threshold so that operations are delayed until the appropriate point, irrespective of battery chemistry.

The present invention may be further illustrated by the following non-limiting examples:

### Example 1

### Triggering EODV Operations Based on Voltage Measurement

Specifically, for a device (*e.g.* a computer) designed for use with coke-based lithium-ion cells which is designed to begin EODV save-to-disk operations when the terminal voltage is measured at 8V, the circuitry of the present invention ensures that there is enough battery capacity to execute all necessary EODV operations even if the cell chemistry changes to, for example, a graphite-based lithium-ion cell (for which at 8V there would not be-enough capacity remaining in the cell to execute the necessary EODV operations). In this situation, the terminal voltage must be modulated, in this case lowered prematurely to 8V. Accordingly, as the remaining battery capacity in the graphite-based lithium-ion cell reaches its limit for EODV operations (which may be in this case 9V), the discharge control circuit 20 is activated to regulate the voltage at the terminals to 8V to trigger the device's EODV operations (which are pre-set in the device to trigger only at the set voltage of 8V), even if the true voltage is greater than 8V. This invention can provide a solution in the circuitry of the battery itself to enable the use of the battery containing different cell chemistries (with different discharge profiles) in devices having a set EODV trigger voltage point.

### Example 2

### Triggering EODV Operations Based on Remaining Capacity

For a specific data device, at the end-of-discharge, (8.1V to 7.5V discharge range), a coke-based battery has more than 100mAh capacity remaining so devices designed around such cell chemistries can suspend operations successfully. However, when a graphite-based battery voltage reaches 8.5V, there is not enough capacity to save the data (graphite-based batteries are not recommended for discharge below 2.7V/cell whereas coke-based batteries can be discharged to 2.5V/cell). In order for a device initially designed for a coke-based battery which monitors terminal voltage and triggers EODV operations when a specific EODV is reached to be able to utilise graphite-based batteries and still suspend operations successfully, the terminal voltage monitored by the device must be lowered when the graphite-based battery reaches a capacity where EODV operations should be triggered. The analogue and digital control circuitry of the present invention is designed to lower this terminal voltage to a predetermined value (such as 7.8V +/- 1% at the terminal) when there is approximately 150mAh capacity remaining in the graphite-based battery. Therefore, the device (*e.g.* a computer) will note the EODV threshold has been met ahead of time and will have sufficient time to save any necessary data and go into suspend mode.

### Example 3

### Delaying EODV Operations Based on Voltage Measurement

Specifically, for a device designed for use with graphite-based lithium-ion cells which is programmed to begin EODV save-to-disk operations when the terminal voltage is measured at 9V, the circuitry of the present invention delays the triggering so that battery capacity is not wasted even if the cell chemistry changes to, for example, a coke-based lithium-ion cell (for which at 9V there is more than enough capacity remaining in the cell to execute the necessary EODV operations, and capacity would be wasted). In this situation, the terminal voltage must be modulated and maintained, in this case raised above about 9V, to prevent the device from triggering EODV operations. Accordingly, as the remaining battery capacity in the coke-based lithium-ion cell reaches the device's trigger point for EODV operations (which may in this case be 9V), the discharge control circuit 20 is activated to maintain the voltage at the terminals above 9V to delay the triggering of the device's EODV operations (which are pre-programmed in the device to trigger only at the set voltage of 9V), even if the true voltage is less than 9V.

## Claims

1. A method for controlling the triggering of an operation in a device which utilises a battery terminal voltage measurement to trigger the operation at a predetermined threshold, comprising converting the terminal voltage to a predetermined value upon reaching a predetermined point to thereby trigger the operation or delay the triggering of the operation.

2. A method according to claim 1, wherein the predetermined point is based on a measurement selected from battery voltage, cell voltage, remaining battery capacity, current, time, temperature, pressure, pH, and safety.

3. A method according to claim 2, wherein the remaining battery capacity measurement is approximately a minimum value for remaining capacity required for completing end-of-discharge operations.

4. A method according to any of claims 1 to 3, wherein the terminal voltage is lowered to a predetermined value which substantially matches the predetermined threshold for a predetermined period to trigger the operation.

5. A method according to any of claims 1 to 3 wherein the terminal voltage is depressed by a predetermined amount relative to the true battery voltage to bring forward triggering of the operation.

6. A method according to any of claims 1 to 3, wherein the terminal voltage is maintained at a predetermined value above the predetermined threshold for a predetermined period to delay triggering of the operation.

7. A method according to any of claims 1 to 3 wherein the terminal, voltage is boosted by a predetermined amount relative to the true battery voltage to delay triggering of the operation.

8. A method according to any of claims I to 4, wherein the predetermined threshold of the device is programmed based on a coke-based lithium-ion battery chemistry and the terminal voltage is lowered to a predetermined value which substantially matches the threshold to trigger the operation when using a graphite-based lithium-ion battery upon reaching the predetermined point.

9. A method according to any of claims 1 to 3 and 6, wherein the predetermined threshold of the device is programmed based on a graphite-based lithium-ion battery chemistry and the terminal voltage is maintained at a predetermined value above the threshold to delay triggering of the operation when using a coke-based lithium-ion battery upon reaching the predetermined points.

10. A method according to any preceding claim, wherein the operation is selected from end-of-discharge operations, shut down operations, safety operations, save-to-disk operations, peripheral disabling operations, access disabling operations, sleep mode operations, low power mode operations, and alarm operations.

11. A method according to any preceding claim, wherein more than one operation is triggered by converting the terminal voltage at more than one predetermined point.

12. An apparatus for controlling the triggering of an operation in a device which utilises a battery terminal voltage measurement to trigger the operation at a predetermined threshold, comprising means for converting the terminal voltage to a predetermined value upon reaching a predetermined point to thereby trigger the operation or delay the triggering of the operation.

13. An apparatus according to claim 12, wherein the means comprises discharge control circuitry (20) within the circuitry of the battery (10).

14. An apparatus according to claim 13, wherein the discharge control circuitry (20) activates voltage modulating circuitry to lower the terminal voltage to a predetermined value which substantially matches the predetermined threshold to trigger the operation.

15. An apparatus according to claim 14, wherein the voltage modulating circuitry comprises a switch.

16. An apparatus according to claim 14, wherein the voltage modulating circuitry comprises a buck converter.

17. An apparatus according to claim 13, wherein the discharge control circuitry (20) activates voltage modulating circuitry to depress the terminal voltage by a predetermined amount relative to the true battery voltage to bring forward triggering of the operation.

18. An apparatus according to claim 13, wherein the discharge control circuitry (20) activates voltage modulating circuitry to maintain the terminal voltage at a predetermined value above the predetermined threshold for a predetermined period to delay triggering of the operation.

19. An apparatus according to claim 18, wherein the voltage modulating circuitry comprises a boost converter (22).

20. An apparatus according to claim 13, wherein the discharge control circuitry (20) activates voltage modulating circuitry to boost the terminal voltage by a predetermined amount relative to the true battery voltage to delay triggering of the operation.

21. An apparatus according to any of claims 12 to 16, wherein the predetermined threshold of the device is programmed based on a coke-based lithium-ion battery chemistry and the means lowers the terminal voltage to a predetermined value which substantially matches the threshold to trigger the operation when using a graphite-based lithium-ion battery upon reaching the predetermined point.

22. An apparatus according to any of claims 12, 13, 18 and 19, wherein the predetermined threshold of the device is programmed based on a graphite-based lithium-ion battery chemistry and the means maintains the terminal voltage at a predetermined value above the threshold to delay triggering of the operation when using a coke-based lithium-ion battery upon reaching the predetermined point.

23. An apparatus according to any of claims 12 to 22, wherein the terminal voltage is converted at more than one predetermined point to trigger more than one operation.

24. A battery (10) comprising apparatus according to claim 12.

## Patentansprüche

1. Verfahren zum Steuern der Triggerung eines Betriebsvorgangs in einer Einrichtung, die eine Batterieanschlussspannungsmessung verwendet, um den Betriebsvorgang bei einer vorgegebenen Schwelle zu triggern, umfassend das Umwandeln der Anschlussspannung in einen vorgegebenen Wert auf das Erreichen eines vorgegebenen Punkts hin, um dadurch den Betriebsvorgang zu triggern oder die Triggerung des Betriebsvorgang zu verzögern.

2. Verfahren nach Anspruch 1, wobei der vorgegebene Punkt gestützt ist auf eine Messung, gewählt aus einer Batteriespannung, einer Zellenspannung, einer verbleibenden Batteriekapazität, einem Strom, der Zeit, einer Temperatur, einem Druck, einem pH und einer Sicherheit.

3. Verfahren nach Anspruch 2, wobei die Messung der verbleibenden Batteriekapazität ungefähr ein minimaler Wert für eine verbleibende Kapazität ist, die zum Fertigstellen von Betriebsvorgängen am Ende einer Entladung benötigt wird.

4. Verfahren nach irgendeinem der Ansprüche 1 bis 3, wobei die Anschlussspannung auf einen vorgegebenen Wert abgesenkt wird, der im Wesentlichen mit der vorgegebenen Schwelle für eine vorgegebene Periode zum Triggern des Betriebsvorgangs übereinstimmt.

5. Verfahren nach irgendeinem der Ansprüche 1 bis 3, wobei die Anschlussspannung durch einen vorgegebenen Betrag relativ zu der echten Batteriespannung niedergedrückt wird, um eine Triggerung des Betriebsvorgangs vorwärts zu bringen.

6. Verfahren nach irgendeinem der Ansprüche 1 bis 3, wobei die Anschlussspannung auf einem vorgegebenen Wert über der vorgegebenen Schwelle für eine vorgegebene Periode gehalten wird, um eine Triggerung des Betriebsvorgangs zu verzögern.

7. Verfahren nach irgendeinem der Ansprüche 1 bis 3, wobei die Anschlussspannung durch einen vorgegebenen Wert relativ zu der echten Batteriespannung geboosted wird, um eine Triggerung des Betriebsvorgangs zu verzögern.

8. Verfahren nach irgendeinem der Ansprüche 1 bis 4, wobei die vorgegebene Schwelle der Einrichtung auf Grundlage einer Koks-gestützten Liziumionenbatterie-Chemie programmiert ist und die Anschlussspannung auf einen vorgegebenen Wert abgesenkt wird, der im Wesentlichen mit der Schwelle übereinstimmt, um den Betriebsvorgang zu triggern, wenn eine Graphit-gestützte Liziumionenbatterie verwendet wird, auf das Erreichen des vorgegebenen Punkts hin.

9. Verfahren nach irgendeinem der Ansprüche 1 bis 3 und 6, wobei die vorgegebene Schwelle der Einrichtung auf Grundlage einer Graphit-gestützten Liziumionenbatterie-Chemie programmiert ist und die Anschlussspannung auf einem vorgegebenen Wert über der Schwelle gehalten wird, um das Triggern des Betriebsvorgangs zu verzögern, wenn eine Koks-gestütze Liziumionenbatterie verwendet wird, auf das Erreichen der vorgegebenen Punkte hin.

10. Verfahren nach irgendeinem vorangehenden Anspruch, wobei der Betriebsvorgang gewählt wird aus Betriebsvorgängen für das Ende einer Entladung, Abschalt-Betriebsvorgängen, Sicherheits-Betriebsvorgängen, Diskspeicher-Betriebsvorgängen, Peripherieabschalt-Betriebsvorgängen, Zugriffsdeaktivierungs-Betriebsvorgängen, Schlafinodus-Betriebsvorgängen, Betriebsvorgängen für einen Modus mit niedriger Energie und Alarm-Betriebsvorgängen.

11. Verfahren nach irgendeinem vorangehenden Anspruch, wobei mehr als ein Betriebsvorgang durch Umwandeln der Anschlussspannung an mehr als einem vorgegebenen Punkt getriggert wird.

12. Vorrichtung zum Steuern der Triggerung eines Betriebsvorgangs in einer Einrichtung, die eine Batterieanschlussspannungsmessung verwendet, um den Betriebsvorgang an einer vorgegebenen Schwelle zu triggern, umfassend eine Einrichtung zum Umwandeln der Anschlussspannung in einen vorgegebenen Wert auf das Erreichen eines vorgegebenen Punkts hin, um dadurch den Betriebsvorgang zu triggern oder die Triggerung des Betriebsvorgangs zu verzögern.

13. Vorrichtung nach Anspruch 12, wobei die Einrichtung eine Entladungssteuerungsschaltungsanordnung (20) innerhalb der Schaltungsanordnung der Batterie (10) umfasst.

14. Vorrichtung nach Anspruch 13, wobei die Entladungssteuerungsschaltungsanordnung (20) eine Spannungsmodulationsschaltungsanordnung aktiviert, um die Anschlussspannung auf einen vorgegebenen Wert abzusenken, der im Wesentlichen mit der vorgegebenen Schwelle übereinstimmt, um den Betriebsvorgang zu triggern.

15. Vorrichtung nach Anspruch 14, wobei die Spannungsmodulationsschaltungsanordnung einen Schalter umfasst.

16. Vorrichtung nach Anspruch 14, wobei die Spannungsmodulationsschaltungsanordnung einen Aufwärts-Abwärts-Wandler umfasst.

17. Vorrichtung nach Anspruch 13, wobei die Entladungssteuerungsschaltungsanordnung (20) eine Spannungsmodulationsschaltungsanordnung aktiviert, um die Anschlussspannung durch einen vorgegebenen Betrag relativ zu der echten Batteriespannung niederzudrücken, um eine Triggerung des Betriebsvorgangs vorwärts zu bringen.

18. Vorrichtung nach Anspruch 13, wobei die Entladungssteuerungsschaltungsanordnung (20) eine Spannungsmodulationsschaltungsanordnung aktiviert, um die Anschlussspannung auf einem vorgegebenen Wert über der vorgegebenen Schwelle für eine vorgegebene Periode, um eine Triggerung des Betriebsvorgangs zu-verzögern, hält.

19. Vorrichtung nach Anspruch 18, wobei die Spannungsmodulationsschaltungsanordnung einen Boost-Wandler (22) umfasst.

20. Vorrichtung nach Anspruch 13, wobei die Entladungssteuerungsschaltungsanordnung (20) eine Spannungsmodulationsschaltungsordnung aktiviert, um die Anschlussspannung um einen vorgegebenen Betrag relativ zu der echten Batteriespannung zu boosten, um eine Triggerung des Betriebsvorgangs zu verzögern.

21. Vorrichtung nach irgendeinem der Ansprüche 12 bis 16, wobei der vorgegebene Schwellwert der Einrichtung auf Grundlage einer Koks-gestützen Liziumionenbatterie-Chemie programmiert ist, und die Einrichtung die Anschlussspannung auf einen vorgegebenen Wert absenkt, der im Wesentlichen mit der Schwelle übereinstimmt, um den Betriebsvorgang, wenn eine Graphit-gestützte Liziumionenbatterie verwendet wird, auf das Erreichen des vorgegebenen Punkts hin zu triggern.

22. Vorrichtung nach irgendeinem der Ansprüche 12, 13, 18 und 19, wobei die vorgegebene Schwelle der Einrichtung auf Grundlage einer Graphit-gestützten Liziumionenbatterie-Chemie programmiert ist und die Einrichtung die Anschlussspannung auf einem vorgegebenen Wert über dem Schwellwert hält, um eine Triggerung des Betriebsvorgangs, wenn eine Koks-gestützte Liziumionenbatterie verwendet wird, auf das Erreichen des vorgegebenen Punkts hin zu verzögern.

23. Vorrichtung nach irgendeinem der Ansprüche 12 bis 22, wobei die Anschlussspannung an mehr als einem vorgegebenen Punkt umgewandelt wird, um mehr als einen Betriebsvorgang zu triggern.

24. Batterie (10), umfassend eine Vorrichtung nach Anspruch 12.

## Revendications

1. Procédé pour commander le déclenchement d'une opération dans un dispositif qui utilise une mesure de tension de bornes d'accumulateur pour déclencher l'opération à un seuil prédéterminé, comprenant la conversion de la tension de bornes selon une valeur prédéterminée suite à l'atteinte d'un point prédéterminé afin d'ainsi déclencher l'opération ou afin d'ainsi retarder le déclenchement de l'opération.

2. Procédé selon la revendication 1, dans lequel le point prédéterminé est basé sur une mesure choisie parmi une tension d'accumulateur, une tension de cellule, une capacité d'accumulateur restante, un courant, un temps, une température, une pression, un pH et une sécurité.

3. Procédé selon la revendication 2, dans lequel la mesure de capacité d'accumulateur restante est approximativement une valeur minimum pour une capacité restante requise pour mener à terme des opérations de fin de décharge.

4. Procédé selon l'une quelconque des revendications 1 à 3, dans lequel la tension de bornes est abaissée jusqu'à une valeur prédéterminée qui correspond de façon substantielle au seuil prédéterminé pendant une période prédéterminée pour déclencher l'opération.

5. Procédé selon l'une quelconque des revendications 1 à 3, dans lequel la tension de bornes est diminuée d'une valeur prédéterminée par rapport à la tension d'accumulateur vraie afin d'aboutir à un déclenchement avancé de l'opération.

6. Procédé selon l'une quelconque des revendications 1 à 3, dans lequel la tension de bornes est maintenue à une valeur prédéterminée au-delà du seuil prédéterminé pendant une période prédéterminée afin de retarder le déclenchement de l'opération.

7. Procédé selon l'une quelconque des revendications 1 à 3, dans lequel la tension de bornes est amplifiée d'une valeur prédéterminée par rapport à la tension d'accumulateur vraie afin de retarder le déclenchement de l'opération.

8. Procédé selon l'une quelconque des revendications 1 à 4, dans lequel le seuil prédéterminé du dispositif est programmé sur la base d'une chimie d'accumulateur à ions de lithium basé sur charbon et la tension de bornes est abaissée jusqu'à une valeur prédéterminée qui correspond de façon substantielle au seuil pour déclencher l'opération lors de l'utilisation d'un accumulateur à ions de lithium basé sur graphite suite à l'atteinte du point prédéterminé.

9. Procédé selon l'une quelconque des revendications 1 à 3 et 6, dans lequel le seuil prédéterminé du dispositif est programmé sur la base d'une chimie d'accumulateur à ions de lithium basé sur graphite et la tension de bornes est maintenue à une valeur prédéterminée au-delà du seuil afin de retarder le déclenchement de l'opération lors de l'utilisation d'un accumulateur à ions de lithium basé sur charbon suite à l'atteinte des points prédéterminés.

10. Procédé selon l'une quelconque des revendications précédentes, dans lequel l'opération est sélectionnée à partir d'opérations de fin de décharge, d'opérations de coupure, d'opérations de sécurité, d'opérations de sauvegarde sur disque, d'opérations d'invalidation de périphérique, d'opérations d'invalidation d'accès, d'opérations en mode sommeil, d'opérations en mode faible puissance et d'opérations d'alarme.

11. Procédé selon l'une quelconque des revendications précédentes, dans lequel plus d'une opération est déclenchée en convertissant la tension de bornes au niveau de plus d'un point prédéterminé.

12. Appareil pour commander le déclenchement d'une opération dans un dispositif qui utilise une mesure de tension de bornes d'accumulateur pour déclencher l'opération à un seuil prédéterminé, comprenant un moyen pour convertir la tension de bornes selon une valeur prédéterminée suite à l'atteinte d'un point prédéterminé afin d'ainsi déclencher l'opération ou afin d'ainsi retarder le déclenchement de l'opération.

13. Appareil selon la revendication 12, dans lequel le moyen comprend un circuit de commande de décharge (20) à l'intérieur du circuit de l'accumulateur (10).

14. Appareil selon la revendication 13, dans lequel le circuit de commande de décharge (20) active un circuit de modulation de tension pour abaisser la tension de bornes jusqu'à une valeur prédéterminée qui correspond de façon substantielle au seuil prédéterminé pour déclencher l'opération.

15. Appareil selon la revendication 14, dans lequel le circuit de modulation de tension comprend un commutateur.

16. Appareil selon la revendication 14, dans lequel le circuit de modulation de tension comprend un convertisseur d'entrave.

17. Appareil selon la revendication 13, dans lequel le circuit de commande de décharge (20) active un circuit de modulation de tension pour diminuer la tension de bornes d'une valeur prédéterminée par rapport à la tension d'accumulateur vraie afin d'induire un déclenchement avancé de l'opération.

18. Appareil selon la revendication 13, dans lequel le circuit de commande de décharge (20) active un circuit de modulation de tension pour maintenir la tension de bornes à une valeur prédéterminée au-dessus du seuil prédéterminé pendant une période prédéterminée afin de retarder un déclenchement de l'opération.

19. Appareil selon la revendication 18, dans lequel le circuit de modulation de tension comprend un convertisseur d'amplification (22).

20. Appareil selon la revendication 13, dans lequel le circuit de commande de décharge (20) active un circuit de modulation de tension pour amplifier la tension de bornes d'une valeur prédéterminée par rapport à la tension d'accumulateur vraie afin de retarder le déclenchement de l'opération.

21. Appareil selon l'une quelconque des revendications 12 à 16, dans lequel le seuil prédéterminé du dispositif est programmé sur la base d'une chimie d'accumulateur à ions de lithium basé sur charbon et le moyen abaisse la tension de bornes jusqu'à une valeur prédéterminée qui correspond de façon substantielle au seuil pour déclencher l'opération lors de l'utilisation d'un accumulateur à ions de lithium basé sur graphite suite à l'atteinte du point prédéterminé.

22. Appareil selon l'une quelconque des revendications 12, 13, 18 et 19, dans lequel le seuil prédéterminé du dispositif est programmé sur la base d'une chimie d'accumulateur à ions de lithium basé sur graphite et le moyen maintient la tension de bornes à une valeur prédéterminée au-delà du seuil afin de retarder le déclenchement de l'opération lors de l'utilisation d'un accumulateur à ions de lithium basé sur charbon suite à l'atteinte du point prédéterminé.

23. Appareil selon l'une quelconque des revendications 12 à 22, dans lequel la tension de bornes est convertie au niveau de plus d'un point prédéterminé pour déclencher plus d'une opération.

24. Accumulateur (10) comprenant un appareil selon la revendication 12.
